# EUROPÄISCHE PATENTANMELDUNG

(11) **EP 2 591 838 A1**
(43) Veröffentlichungstag der Anmeldung: **15.05.2013**
(21) Anmeldenummer: 12189910.8
(22) Anmeldetag: 25.10.2012
(51) Int. Cl.: B01D 29/11, B01D 65/08, C02F 3/28

(54) **Verfahren zur Trennung eines wässrigen Substrats in ein Konzentrat und Filtrat**

(30) Priorität: 09.11.2011 DE 102011117990
(71) Anmelder: 4Biogas GmbH & Co. KG, 44229 Dortmund (DE)
(72) Erfinder: Brachthäuser, Dr., Benno, 44229 Dortmund (DE); Kiomall, Daniel, 44137 Dortmund (DE); Karl, Rainer, 99718 Clingen (DE); Bexten, Matthias, 33378 Rheda-Wiedenbrück (DE)
(74) Vertreter: Meinke, Dabringhaus und Partner GbR

(57) **Zusammenfassung**

Die Erfindung betrifft ein Verfahren zur Trennung eines wässrigen Substrats in ein Konzentrat und Filtrat in einer Biogasanlage (1), bei dem in einem Filter (7) mit einer Substrat- und Filtratseite (9,10) eine aus dem Substrat zu filtrierende Flüssigkeit aus der Substratseite (9) in die Filtratseite (10) filtriert.

Um das Verfahren derart weiterzuentwickeln, dass es ein leistungsfähiges Instrumentarium darstellt, höherenergetische Feststoffe noch besser aus dem Substrat abzutrennen, sieht die Erfindung vor, dass der Druck auf der Filtratseite (10) bis zu einem Druckausgleich zwischen Substrat- und Filtratseite (9,10) variiert wird.

## Beschreibung

Die Erfindung betrifft ein Verfahren zur Trennung eines wässrigen Substrats in ein Konzentrat und Filtrat in einer Biogasanlage, bei dem in einem Filter mit einer Substrat- und Filtratseite eine aus dem Substrat zu filtrierende Flüssigkeit aus der Substratseite in die Filtratseite filtriert.

Zudem betrifft die Erfindung eine Biogasanlage zur Durchführung des Verfahrens mit zumindest einem Biogasreaktor.

Verfahren der eingangs genannten Art sind aus dem Stand der Technik bekannt und dienen insbesondere dazu, energiearme Substratanteile von energiereichen Substratanteilen zu trennen, um eine erhöhte Biogasausbeute des eingesetzten Substrats in einer Biogasanlage zu erzielen.

Beim anaeroben Abbau von Biomasse (Vergärung) wird die in einem flüssigen Milieu befindliche Biomasse zunächst von speziellen Bakterien, den sogenannten Hydrolysebakterien, vorverdaut. Hierbei werden aus komplexen organischen Molekülen, z.B. Proteinen, Stärke, Fasern und Fetten, kurze, für andere Bakterien verdaubare Stoffe, wie beispielsweise Glucose, Aminosäuren oder Fettsäuren, erzeugt. Diese werden im Anschluss von Essigsäurebakterien zu Essigsäure umgewandelt und weiter zu Kohlendioxid und Wasserstoff zersetzt, die schließlich von speziellen Archaeen, wie z.B. den Methanobacter, zu Methan umgesetzt werden.

Bei diesen Reaktionen treten zwei geschwindigkeitsbestimmende Schritte auf. Ein erster geschwindigkeitsbestimmender Schritt stellt der Prozess der Methanbildung dar, da die Methanatmung der Archaeen länger als der Stoffwechsel der Bakterien andauert. Als weiterer geschwindigkeitsbestimmender Schritt gilt die Hydrolyse der Stoffe, deren Abbau sehr lange dauert. Hierbei handelt es sich im Speziellen um Zellulosefasern. Obwohl die Hydrolyse von Stärke und Aminosäure gewöhnlich unter 24 Stunden und der Abbau von Lipiden zu Fettsäuren zwischen einem und drei Tagen dauert, kann der Abbau der dickeren Zellulosefasern 10 bis 20 Tage und teilweise darüber hinaus in Anspruch nehmen, und zwar speziell in für Biogasanlagen leicht alkalischem Milieu.

Um in einem Biogasreaktor einer Biogasanlage mit einer hydrolytischen Verweilzeit von ca. 15 Tagen die Abbaurate und damit die Biogasausbeute zu erhöhen, sollte speziell die Verweilzeit der langsam abbaubaren Substrate in dem Biogasreaktor erhöht werden.

Es zeigt sich, dass durch diesen Abbau der Trockensubstanzgehalt des Substrats in dem Biogasreaktor von ca. 15 % auf unter 8 % sinkt. Durch Abtrennen des energiearmen Wassergehaltes aus dem Substrat kann dabei die Verweilzeit der höherenergetischen Feststoffe in dem Substrat und damit die Abbaurate und die Biogasausbeute des eingesetzten Substrats bei gleicher Biogasreaktorgröße gesteigert werden.

Es ist deshalb Aufgabe der vorliegenden Erfindung, ein Verfahren der eingangs genannten Art derart weiterzuentwickeln, dass es ein leistungsfähiges Instrumentarium darstellt, höherenergetische Feststoffe noch besser aus dem Substrat abzutrennen.

Diese Aufgabe wird mit den Merkmalen des Anspruchs 1 gelöst. Vorteilhafte Ausgestaltungen der Erfindung ergeben sich aus den Unteransprüchen.

Die Erfindung sieht vor, dass der Druck auf der Filtratseite bis zu einem Druckausgleich zwischen Substrat- und Filtratseite variiert wird.

Hierzu wird zunächst einem Biogasreaktor über eine Substratleitung kontinuierlich wässriges Substrat entnommen und über einen Filter geleitet. Hierbei werden nur Flüssigkeiten, welche einen geringen Feststoffanteil besitzen und damit energetisch niederwertig sind, abgetrennt.

Hierzu wird vorzugsweise auf der Substrat- und Filtratseite der Druck mit Drucksensoren gemessen. Ist der Druck auf beiden Seiten gleich, so kann sich die flüssige Phase durch das Filtermedium bewegen und abgetrennt werden. An einem Ausgang der Substratseite tritt das Konzentrat aus.

Der Erfindung liegt der Gedanke zugrunde, dass der Substratstrom als horizontale Reibungskraft und der Filtratstrom als vertikale Sogkraft wirken. Damit der Filter nicht verstopft, müssen diese beiden Kräfte im Gleichgewicht stehen. Partikel und Fasern, welche durch die Flusskraft des Filtrates in Richtung des Filtermediums gezogen werden, müssen von der Fluss- und Reibungskraft dabei von diesem entfernt werden, so dass es zu keiner Verstopfung kommt. Hierzu wird der Filtratstrom über den Druck geregelt.

Ausgangspunkt der Überlegungen ist dabei die berechtigte Annahme, dass bei gleichem Druck auf der Substrat- und Filtratseite die beiden Kräfte gleich sind. Hierzu wird wiederum vorzugsweise der Substrat- und Filtratstrom von zwei Ventilen geregelt. Einerseits wird zweckmäßigerweise ein Regelventil verwendet, mit dem der Filtratstrom variabel geregelt werden kann, z.B. ein Nadelventil, andererseits wird ein schnell schließendes Absperrventil eingesetzt, welches immer dann schließt, wenn das Regelventil nicht schnell genug reagieren kann.

Als Regelgröße wird vorteilhafterweise die Druckdifferenz zwischen Substrat- und Filtratseite gemessen. Ist der Druck auf der Substratseite größer, so ist das Bestreben der Flüssigkeit, auf die Filtratseite zu strömen, größer und es steigt damit der Filtratstrom. Hierdurch verschiebt sich das Kräftegleichgewicht zwischen Substrat- und Filtratstrom und die Filterkerze verstopft.

Das Absperrventil schließt und unterdrückt den Filtratstrom gänzlich, so dass nur noch der Substratstrom als raue Komponente, welche durch seine Strömung eventuelle im Filter befindliche Partikel und Fasern mit sich trägt, in dem Filter wirken kann und sich die Filterkerze selbstständig reinigt. Gleichzeitig zum Absperrventil schließt auch das Regelventil, so dass nach Öffnung des Absperrventils der Filtratstrom zunächst minimal ist. Hierdurch wird verhindert, dass der Druck auf der Filtratseite nach Öffnen des Absperrventils zu stark sinkt. Nun wird das Regelventil so weit geöffnet, bis die Drücke auf der Substratseite und der Filtratseite das gleiche Niveau erreicht haben.

Die Folge ist, dass die Kraft zwischen Substrat- und Filtratstrom gleich ist und der Separationsprozess so lange läuft, bis es zu einem Druckstoß auf der Substratseite bzw. einem Druckabfall auf der Filtratseite kommt.

Im Folgenden wird die Erfindung anhand der Zeichnung näher erläutert. Es zeigt in schematischer Darstellung:

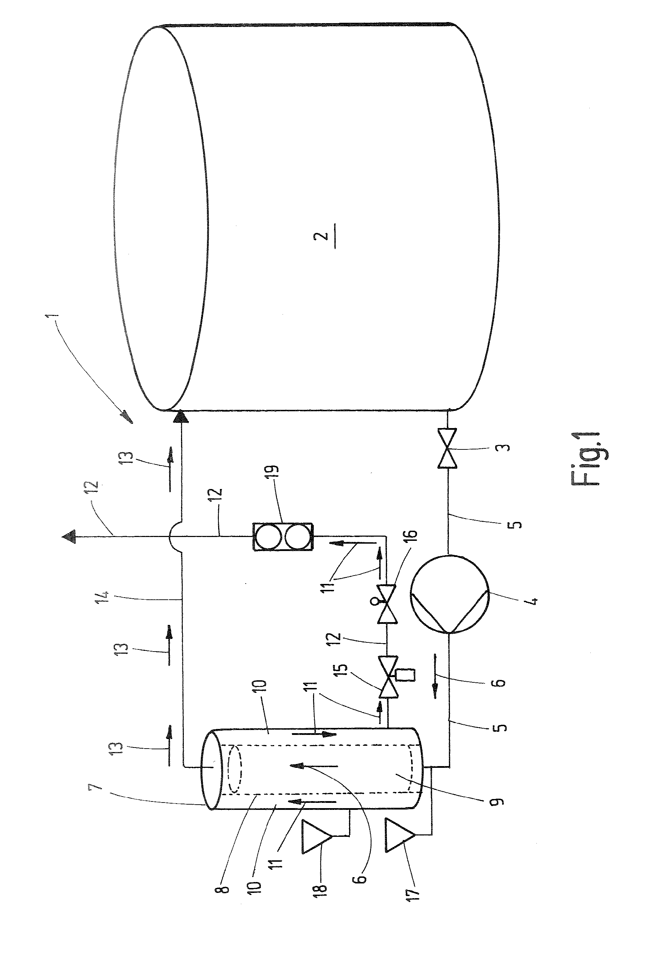

- Fig. 1: ein Verfahren gemäß der Erfindung.

Das in Fig. 1 gezeigte erfindungsgemäße Verfahren beginnt in der Biogasanlage 1 mit der kontinuierlichen Entnahme von Substrat aus dem Biogasreaktor 2, in dem die Fermentation und Hydrolyse der Rohstoffe des Substrats erfolgen.

Hierzu wird das Substrat aus dem Bodenbereich des Biogasreaktors 2 mittels der Pumpe 4 über das Ventil 3 in die Substratleitung 5 gepumpt und durch die Substratleitung 5 als Substratstrom 6 in den als Cross-Flow-Filter ausgebildeten Filter 7 geführt. In dem Filter 7 erfolgt die Trennung des Substrats in ein energiereiches Konzentrat, welches einen hohen Feststoffgehalt und einen geringen Wassergehalt aufweist und in ein energiearmes Filtrat, welches sich durch einen geringen Feststoffgehalt und einen hohen Wasseranteil auszeichnet.

Für die Trennung in Filtrat und Konzentrat ist in dem Filter 7 ein Filtermedium 8 vorgesehen, das den Filter 7 in eine Substratseite 9, d.h. in einen Bereich des Filters 7 vor der Filterung, und in eine Filtratseite 10, d.h. in einen Bereich des Filters 7 nach der Filterung, unterteilt. Das Filtrat befindet sich somit auf der Filtratseite 10 und wird als Filtratstrom 11 in die Filtratleitung 12 transportiert und aus der Biogasanlage 1 geführt. Das Konzentrat dagegen befindet sich auf der Substratseite 9 und wird als Konzentratstrom 13 in die Konzentratleitung 14 geleitet und weiter zum Biogasreaktor 2 transportiert, indem es zur weiteren Fermentation und Biogasproduktion verwendet werden kann.

In dem Filter 7 konkurrieren zwei für die Filtration relevanten Kräfte. Zum einen die horizontale Reibungskraft, die sich in dem Substratstrom 6 manifestiert und andererseits der Filtratstrom 11, der als vertikale Sogkraft wirkt. Um eine Verstopfung des Filters 7 zu vermeiden, müssen diese beiden Kräfte im Gleichgewicht sein. Partikel und Fasern, welche durch die Flusskraft des Filtrats 7 in Richtung des Filtermediums 8 gezogen werden, müssen von der Fluss- und Reibungskraft hierzu von dem Substratstrom 6 entfernt werden. Um die beiden relevanten Kräfte in dem Filter 7, d.h. die Reibungs- und Sogkraft, miteinander ins Gleichgewicht zu bringen, erfolgt eine Regelung des Filtratstroms 11 über den Druck.

Hierzu ist in der Filtratleitung 12 ein Absperrventil 15 und ein Regelventil 16 angeordnet. Mit dem Regelventil 16 erfolgt eine variable Regelung des Filtratstroms 11, wohingegen das Absperrventil 15 immer dann eingesetzt und geschlossen wird, wenn eine schnelle Reaktion des Regelventils 16 ausbleibt.

Die Druckdifferenz zwischen Substratstrom 6 und Filtratstrom 11 fungiert als Regelgröße. Die Drücke des Substrat- 6 und Filtratstroms 11 werden dabei über die Drucksensoren 17, 18 gemessen. Ist der Druck auf der Substratseite 9 größer als auf der Filtratseite 10, so ist es das Bestreben der Flüssigkeit, wässrigen Substratstrom 6 in die Filtratseite 10 hineinzufiltrieren. Die Folge ist, dass hierdurch der Filtratstrom 11 steigt. Hierdurch verschiebt sich wiederum das Kräftegleichgewicht zwischen der horizontalen Reibungskraft und der vertikalen Sogkraft und der Filter 7 verstopft. Zur Schließung des Absperrventils 15 wird nun der Filtratstrom 11 gänzlich unterdrückt, so dass ausschließlich der Substratstrom 6 als raue Komponente der durch die Strömung evtl. im Filter 7 befindliche Partikel und Fasern zusätzlich mit sich trägt und in dem Filter 7 wirkt, was mit einer selbstständigen Reinigung des Filters 7 einhergeht. Gleichzeitig zum Absperrventil 15 schließt auch das Regelventil 16, so dass nach Öffnung des Absperrventils 15 der Filtratstrom 6 minimiert wird. Hierdurch wird verhindert, dass der Druck auf der Filtratseite 10 nach Öffnung des Absperrventils 15 übermäßig sinkt.

In erfindungswesentlicher Weise wird nun das Regelventil 16 so weit geöffnet, bis die Drücke auf der Substratseite 9, d.h. in dem Substratstrom 6 und auf der Filtratseite 10, d.h. in dem Filtratstrom 11, gleich sind. Die Folge hiervon ist, dass die Kraft zwischen Substratstrom 6 und Filtratstrom 11 gleich ist und der Trennungsprozess, d.h. die Trennung in Konzentrat und Filtrat wieder solange vonstatten geht bis es zu einem Rückstoß auf der Substratseite 9 bzw. einem Druckabfall auf der Filtratseite 10 kommt. Das Filtrat wird als Filtratstrom 11, wie bereits erwähnt, über die Filtratleitung 12 aus der Biogasanlage 1 geführt und das Konzentrat als Konzentratstrom 13 über die Konzentratleitung 14 dem Biogasreaktor 2 zugeführt.

Zur Quantifizierung des Filtratstroms 11 ist in der Filtratleitung 12, und zwar den Ventilen 15, 16 nachgeschaltet, ein Durchflussmesser 19 in Gestalt eines magnetisch induktiven Durchflussmessers zur Messung des Filtratstroms 11 angeordnet. Die ermittelte Messgröße dient dabei als weitere Regelgröße zur Öffnung des Regelventils 16. Das Regelventil 16 kann auch die Funktion erfüllen, sofern ein Kräftegleichgewicht in dem Filter 7 besteht, eine fest definierte Trennungsrate in dem Filter 7 einzustellen. Die Regelung der Ventile 15, 16 erfolgt durch herkömmliche Messelektronik.

Die vorliegende Erfindung beschränkt sich in ihrer Ausführung nicht auf das vorstehend angegebene Ausführungsbeispiel. Vielmehr ist eine Anzahl von Varianten denkbar, welche von der dargestellten Lösung auch bei anders gearteten Lösungen Gebrauch machen.

### Bezugszeichenliste:

- 1: Biogasanlage
- 2: Biogasreaktor
- 3: Ventil
- 4: Pumpe
- 5: Substratleitung
- 6: Substratstrom
- 7: Filter
- 8: Filtermedium
- 9: Substratseite
- 10: Filtratseite
- 11: Filtratstrom
- 12: Filtratleitung
- 13: Konzentratstrom
- 14: Konzentratleitung
- 15: Absperrventil
- 16: Regelventil
- 17,18: Drucksensoren
- 19: Durchflussmesser

## Patentansprüche

1. Verfahren zur Trennung eines wässrigen Substrats in ein Konzentrat und Filtrat in einer Biogasanlage (1), bei dem in einem Filter (7) mit einer Substrat- und Filtratseite (9,10) eine aus dem Substrat zu filtrierende Flüssigkeit aus der Substratseite (9) in die Filtratseite (10) filtriert,
**dadurch gekennzeichnet,**
**dass** der Druck auf der Filtratseite (10) bis zu einem Druckausgleich zwischen Substrat- und Filtratseite (9,10) variiert wird.

2. Verfahren nach Anspruch 1,
**dadurch gekennzeichnet,**
**dass** als Filter (7) ein Cross-Flow-Filter eingesetzt wird.

3. Verfahren nach Anspruch 1 oder 2,
**dadurch gekennzeichnet,**
**dass** ein aus dem Filtrat resultierender Filtratstrom (11) über Ventile (15,16) geregelt wird.

4. Verfahren nach einem oder mehreren der Ansprüche 1 bis 3,
**dadurch gekennzeichnet,**
**dass** Drucksensoren (17,18) die Drücke in der Substrat- und Filtratseite (9,10) messen.

5. Verfahren nach einem oder mehreren der Ansprüche 3 oder 4,
**dadurch gekennzeichnet,**
**dass** der Filtratstrom (11) über einen Durchflussmesser (19) quantifiziert wird.

6. Verfahren nach einem der vorangehenden Ansprüche,
**dadurch gekennzeichnet,**
**dass** ein Substratstrom (6) von einem Biogasreaktor (2) über eine Substratleitung (5) in den Filter (7) geleitet wird.

7. Verfahren nach einem der vorangehenden Ansprüche 3 bis 6,
**dadurch gekennzeichnet,**
**dass** der Filtratstrom (11) über eine Filtratleitung (12) aus der Biogasanlage (1) geführt wird.

8. Verfahren nach einem der vorangehenden Ansprüche,
**dadurch gekennzeichnet,**
**dass** das Konzentrat über eine Konzentratleitung (14) in den Biogasreaktor (2) geleitet wird.

9. Biogasanlage (1) zur Durchführung des Verfahrens nach einem der vorangehenden Ansprüche mit zumindest einem Biogasreaktor (2),
**dadurch gekennzeichnet,**
**dass** sie einen Filter (7) aufweist, wobei zwischen Biogasreaktor (2) und Filter (7) eine Substratleitung (5) und zwischen Filter (7) und Biogasreaktor (2) eine Konzentratleitung (14) angeordnet sind.

10. Biogasanlage nach Anspruch 9,
**dadurch gekennzeichnet,**
**dass** von dem Filter (7) eine Filtratleitung (17) wegführt.

11. Biogasanlage nach Anspruch 10,
**dadurch gekennzeichnet,**
**dass** die Filtratleitung (2) mit Ventilen (15,16) versehen ist.

12. Biogasanlage nach einem der Ansprüche 9 bis 11,
**dadurch gekennzeichnet,**
**dass** der Filter (7) ein Cross-Flow-Filter ist.
